# EUROPÄISCHE PATENTSCHRIFT

(11) **EP 3 806 974 B1**
(45) Veröffentlichungstag und Bekanntmachung des Hinweises auf die Patenterteilung: **15.06.2022**
(21) Anmeldenummer: 19778969.6
(22) Anmeldetag: 25.09.2019
(51) Int. Cl.: B01D 29/21, B01D 29/52, B01D 29/54

(54) **FILTERVORRICHTUNG FÜR FLUIDE**
FILTER DEVICE FOR FLUIDS
DISPOSITIF DE FILTRATION DE FLUIDES

(30) Priorität: 09.10.2018 DE 102018008114
(43) Veröffentlichungstag der Anmeldung: 21.04.2021
(73) Patentinhaber: Hydac Process Technology GmbH, 66538 Neunkirchen (DE)
(72) Erfinder: WNUK, Ralf, 66450 Bexbach/Kleinottweiler (DE); SCHMIDT, Hans-Josef, 66629 Freisen (DE); VITTE, Pascal Eric, Robina, Queensland 4226 (AU)
(74) Vertreter: Bartels und Partner, Patentanwälte
(86) Internationale Anmeldenummer: PCT/EP2019/075898
(87) Internationale Veröffentlichungsnummer: WO 2020/074260

(56) Entgegenhaltungen:
- EP-A1- 0 432 906
- WO-A1-2014/067615
- DE-A1- 2 118 777
- GB-A- 1 346 569
- US-A- 5 015 375

## Beschreibung

Die Erfindung betrifft eine Filtervorrichtung für Fluide, mit einem Filtergehäuse, in dem Elementaufnahmen für eine Mehrzahl von Filterelementen vorgesehen sind, deren Filtermedium im Filtergehäuse eine Rohseite von einer Reinseite trennt, wobei das Filtergehäuse für das Einsetzen und Herausnehmen der Filterelemente öffenbar ist, wobei mindestens zwei Filterelemente in Übereinanderanordnung einen Filterstapel ausbilden, und wobei für die Filterelemente ein Träger in der Art eines Korbes vorgesehen ist, der in das Filtergehäuse einsetzbar und aus diesem herausnehmbar ist und an dem die Filterelemente lösbar festlegbar sind.

Durch die WO 2014/067615 A1 ist eine gattungsgemäße Filtervorrichtung für Fluide bekannt, insbesondere für niedrigviskose Flüssigkeiten wie Wasser. Die bekannte Lösung zeichnet sich insbesondere dadurch aus, dass für die Filterelemente, die der Partikelfiltration dienen, ein Träger in der Art eines Korbes vorgesehen ist, der in das Filtergehäuse einsetzbar und aus diesem herausnehmbar ist und an dem die Filterelemente lösbar festlegbar sind. Dadurch, dass ein die Filterelemente tragender Korb als austauschbarer Einsatz des Filtergehäuses vorgesehen ist, kann eine große Anzahl von Filterelementen gemeinsam aus dem Gehäuse entnommen und in dieses eingesetzt werden. Dadurch sind die mit den Elementwechseln verbundenen Wartungsarbeiten wesentlich vereinfacht, selbst wenn der Korb zur Erzielung großer Filterflächen eine große Anzahl von Filterelementen enthalten sollte. Die bekannte Lösung ermöglicht auch ihren Einsatz unter erschwerten Bedingungen, wie auf Bohrplattformen bei Off-Shore-Ölfeldern. Wenn beim Betrieb betreffender Ölfelder eine Druckerhöhung erforderlich ist, wird behandeltes Seewasser von einer entsprechenden Bohrplattform ins Ölfeld gepumpt. Die zur Behandlung des Seewassers insoweit vorgesehene bekannte Filtervorrichtung ist bei derartigen Anwendungen auf eine Filterfläche von mehr als 500 m² bei einer Filterfeinheit von 5 *µ*m ausgelegt.

Filter mit einem Adsorptionsmedium gehen aus der EP 0 432 906 A1, der GB 1 346 569 A, der DE 21 18 777 A1 und der US 5 015 375 A hervor.

Ausgehend von diesem Stand der Technik liegt der Erfindung die Aufgabe zugrunde, eine Filtervorrichtung der betrachteten Gattung unter Beibehalten ihrer Vorteile, wie die angesprochene besondere Wartungsfreundlichkeit, dahingehend weiter zu verbessern, dass ihr Einsatzgebiet und ihre Anwendungsmöglichkeiten erweitert sind.

Erfindungsgemäß ist diese Aufgabe durch eine Filtervorrichtung gelöst, die die Merkmale des Patentanspruches 1 in seiner Gesamtheit aufweist.

Demgemäß besteht nach dem kennzeichnenden Teil des Patentanspruchs 1 eine wesentliche Besonderheit der erfindungsgemäßen Filtervorrichtung darin, dass die verwendeten Filterelemente neben einem Filtermedium für die Partikelfiltration von Fluiden zusätzlich ein Adsorptionsmedium aufweisen; dass der jeweilige Filterstapel von einem Aufnahmeelement durchgriffen ist, das in der Art einer Austauschpatrone gebildet ist und das das Adsorbtionsmedium aufweist; und dass das Aufnahmeelement einen zylinderförmigen, geschlossen ausgebildeten Mantel aufweist, der das Adsorbtionsmedium als Schüttung aufnimmt und der zumindest an seinen freien, einander gegenüberliegenden Stirnseiten Fluiddurchtrittsstellen aufweist. Insbesondere bei der Förderung von Gasen aus dem Erdreich lösen sich Schwermetalle einschließlich Quecksilber aus dem Boden, wobei das gelöste Erdreich auch radioaktiv sein kann. Aufgrund des bei der Filtervorrichtung eingesetzten Adsorptionsmediums bei den Filterelementen lassen sich solche Stoffe erfolgreich aus dem jeweiligen Fluid, das auch ein reiner Gasstrom sein kann, entfernen. Mit der erfindungsgemäßen Filtervorrichtung ist somit nicht nur wirksam eine Partikelfiltration über das jeweilige Filterelement erreicht, sondern auch eine Adsorption von umweltschädigenden Stoffen über das genannte Adsorbtionsmedium.

Der Filterstapel bildet dabei eine Art Stack aus, der sich leicht innerhalb der Filtervorrichtung tauschen lässt. Insbesondere können innerhalb des Filterstapels oder Filterstacks die jeweiligen Filterelemente getrennt von dem jeweiligen Aufnahmeelement getauscht werden. Insbesondere ist die Möglichkeit gegeben, ein einzelnes Aufnahmeelement über die gesamte Länge der aufzuschiebenden Filterelemente eines Stacks einzusetzen.

Über die geschlossene Mantelaußenfläche ist sichergestellt, dass die Aktivkohle als Schüttung im Aufnahmeelement verbleibt.

Bei einer besonders bevorzugten Ausführungsform der erfindungsgemäßen Filtervorrichtung weist das Adsorbtionsmedium Aktivkohle auf, vorzugsweise ist dieses Medium vollständig aus Aktivkohle gebildet. Die eingesetzte Aktivkohle ist als poröser, feinkörniger Kohlenstoff mit großer innerer, abreinigender Oberfläche ausgebildet. Vorzugsweise wird die Aktivkohle als Schüttung in dem jeweiligen Filterelement eingesetzt.

Ferner ist es vorteilhaft, dass das jeweilige Filterelement ein mehrlagiges, plissiertes Filtermedium aufweist, das den Mantel des Aufnahmeelementes umfasst. Vorzugsweise ist das Filtermedium in der Art eines Mesh-Packs ausgebildet, das besonders geeignet ist für die Aufnahme von Partikelverschmutzungen jedweder Art.

Bei einer weiteren bevorzugten Ausführungsform der erfindungsgemäßen Filtervorrichtung ist vorgesehen, dass zwischen dem jeweiligen Filtermedium und dem zuordenbaren Mantel des Aufnahmeelementes ein fluiddurchlässiges Stützrohr des insoweit eine Baueinheit bildenden Filterelementes angeordnet ist. Dergestalt kann sich das plissierte Filtermedium beim Durchströmungsvorgang an der Innenseite des zugeordneten Stützrohres abstützen. Für einen Austauschvorgang kann dann das jeweilige Filterelement mit der Innenseite seines Stützrohres am Außenumfang des Umfassungsmantels des Aufnahmeelementes für den Adsorptionsstoff hemmnisfrei abgleiten.

Bei vorteilhaften Ausführungsbeispielen weist der Korb eine Trägerplatte auf, die bei der Einbauposition im Gehäuse die Rohseite von der Reinseite trennt und zur Bildung der Elementaufnahmen Fluiddurchgänge aufweist, an denen die Filterelemente derart lösbar festlegbar sind, dass die Fluiddurchgänge mit dem vom Filtermedium umgebenen inneren Filterhohlraum in Verbindung sind.

Mit besonderem Vorteil kann die Anordnung hierbei so getroffen sein, dass das Filtergehäuse einen den Korb aufnehmenden kreiszylindrischen Abschnitt mit einer von einem abnehmbaren Deckel verschließbaren Öffnung aufweist, durch die hindurch der Korb einsetzbar und herausnehmbar ist, wobei die Trägerplatte kreisrund und bei der Einbauposition umfänglich an einer Gehäusewand abgedichtet ist.

Nachstehend ist die Erfindung anhand eines in der Zeichnung dargestellten Ausführungsbeispiels im Einzelnen erläutert. Es zeigen in prinzipieller und nicht maßstäblicher Form
- Fig. 1: in perspektivischer Schrägansicht und in Längsrichtung aufgeschnitten die erfindungsgemäße Filtervorrichtung als Ganzes; und
- Fig. 2: einen Längsschnitt durch eine Filterkerze, bestehend aus mehreren, teilweise dargestellten Filterelementen nebst Adsorptionselement.

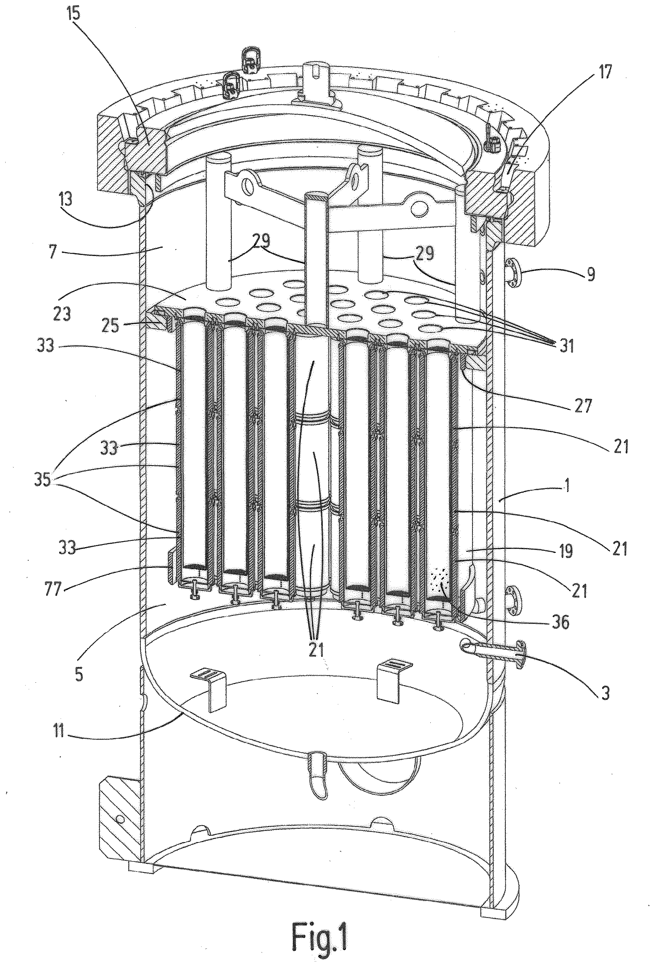

Die Fig. 1 zeigt ein Filtergehäuse 1 mit einem Fluideinlass 3 für den Zustrom eines Unfiltrats, beispielsweise in Form eines bei der Gasförderung auftretenden, verunreinigten Fluids, das Bestandteile von Quecksilber aufweist, zu einem rohseitigen Raum 5 des Gehäuses 1. Am reinseitigen Abströmraum 7 befindet sich am Gehäuse 1 ein Auslass 9. Das Gehäuse 1 ist, von einem gewölbten, geschlossenen Bodenteil 11 abgesehen, kreiszylindrisch, mit einer oberen Öffnung 13, die durch einen abnehmbaren Deckel 15 verschließbar ist. Der Deckel 15 ist drehbar und mittels eines Bajonettverschlusses 17 am Gehäuse 1 abnehmbar festgelegt.

Zwischen dem rohseitigen Einströmraum 5 und dem reinseitigen Abströmraum 7 befindet sich die Filteranordnung, bestehend aus einem Korb 19 als Träger für eine Anzahl von Filterkerzen 21, die in der Zeichnung nicht sämtlich beziffert sind. Der Korb 19 ist über die Öffnung 13 in das Gehäuse 1 einsetzbar und aus diesem wieder im Bedarfsfall herausnehmbar. Als Tragelement für die Filterkerzen 21 weist der Korb 19 eine kreisrunde Trägerplatte 23 auf, die, wenn der Korb 19 in seine Funktionsposition in das Gehäuse 1 eingesetzt ist, an einem Anlagering 25, der an der Innenseite des Gehäuses 1 vorsteht, anliegt, wobei ein Bund 27 der Trägerplatte 23 am Anlagering 25 abgedichtet ist. Die Trägerplatte 23 trennt im Gehäuse 1 den rohseitigen Einströmraum 5 vom reinseitigen Abströmraum 7. Um den Korb 19 in Anlage am Anlagering 25 zu halten, sind am Deckel 15 mehrere stabförmige Niederhalter 29 angebracht, die sich vom Deckel 15 axial durch den Abströmraum 7 zur Trägerplatte 23 erstrecken.

Letztere weist für jede Filterkerze 21 einen Fluiddurchgang 31 auf, von denen in Fig. 1 der Übersichtlichkeit halber lediglich einige beziffert sind. Bei dem in der Zeichnung dargestellten Beispiel sind für 36 Filterkerzen 21 dementsprechend 36 Fluiddurchgänge 31 vorgesehen. An jedem Fluiddurchgang 31 ist eine Elementaufnahme gebildet, an der die betreffende Filterkerze 21 lösbar festlegbar ist.

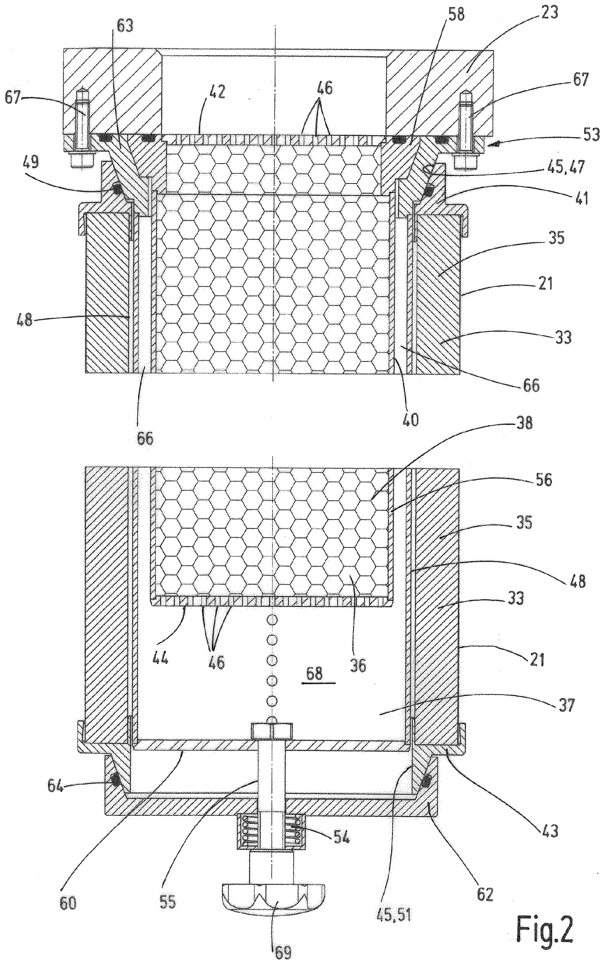

Die in Fig. 2 in Einzeldarstellung teilweise gezeigte Filterkerze 21 ist jeweils aus drei gestapelten, durch Gleichteile gebildete Filterelemente 33 in der Art eines Stacks aufgebaut. Diese weisen ein Filtermedium 35 auf, das in an sich bekannter Weise, in Form eines Hohlzylinders einen inneren Filterhohlraum 37 umgibt und eine große plissierte Filterfläche zur Verfügung stellt. Derartige Filtermedien können ein Polyestermaterial und/oder Polypropylen enthalten und mehrlagig sein. Im vorliegenden Fall kann das Filtermedium 35 von einem zusätzlichen Stützgewebe nach außen hin umgeben sein. Ebenso kann hier ein Mesh-Pack als Filtermedium für partikuläre Verschmutzungen vorgesehen sein. Endseits ist das Filtermedium 35 jeweils von einer Endkappe 41 und 43 eingefasst, die beim vorliegenden Beispiel aus Polyamid gebildet sind. Das so gebildete jeweilige Filterelement 33 ist als Einwegelement vollständig veraschbar. Ein solches Filterelement kann etwa 5 m² Filterfläche zur Verfügung stellen, sodass eine Filterkerze 21 mit drei Filterelementen 33 etwa 15 m² Filterfläche bietet. Wenn für eine Anwendung zur Gasgewinnung eine Gesamt-Filterfläche von etwa 500 m² erforderlich ist, kann dies realisiert werden, wenn im Korb 19 des Filtergehäuses 1 36 Plätze für Filterkerzen 21 mit je drei Filterelementen 33 vorgesehen sind, wie dies beim dargestellten Beispiel teilweise gezeigt ist.

Für ein einfaches Aufeinanderstapeln der Filterelemente 33 sind die Endkappen am einen und am anderen Ende unterschiedlich in der Weise gestaltet, dass eine Endkappe 41 erster Art eine zu einer Endkappe 43 zweiter Art komplementäre Form besitzt. Genauer gesagt weist die Endkappe 41 erster Art jeweils einen die Kappenöffnung 45 umgebenden, axial vorspringenden, nach außen konisch erweiterten Trichter 47 auf, an dessen Innenseite sich ein O-Ring 49 befindet. Die Endkappe 43 zweiter Art weist einen sich an die Öffnung 45 anschließenden, axial vorstehenden Ringkörper 51 auf, der einen Außenkonus für einen passenden Eingriff in den Trichter 47 der Endkappe 41 der ersten Art bildet. Bei einfachem Zusammensetzen der Einzelelemente 33 zur Bildung der Filterkerze 21 ist daher zwischen den Endkappen 41, 43 jeweils eine Axial-Radial-Dichtung gebildet. In der Fig. 2 sind nur das unterste und das oberste Element 33 teilweise dargestellt. Das mittlere, dritte Element wurde der einfacheren Darstellung wegen weggelassen.

Die Filterkerzen 21 sind an den Fluiddurchgängen 31 der Trägerplatte 23 des Korbes 19 mittels einer Verbindungseinrichtung 53 lösbar festlegbar, die einen Konusring 63 aufweist, der mit der Trägerplatte 23 durch Schraubbolzen 67 verschraubt ist. An dem Konusring 63 ist ein Mantel 40 befestigt, an dem ein Verbindungsstab 55 mit seinem einen Ende festgelegt ist. Der Verbindungsstab 55 erstreckt sich in axialer Richtung bis über das untere Ende einer festzulegenden Filterkerze 21 hinaus. Im Bereich des entsprechenden Endes ist der Verbindungsstab 55 mit einer Handhabe 69 versehen, die federgestützt über ein Tellerfederpaket 54 die Elemente 33 aneinanderhält sowie in Position an der Trägerplatte 23.

Um die betreffenden Filterkerzen 21 derart in Position zu halten, dass die Elemente 33 an den Endkappen 41, 43 gegenseitig abgedichtet sind und die Endkappe 41 des obersten Elements 33 über einen zusätzlichen Konusring 63 mit dem Fluiddurchgang 31 der Trägerplatte 23 in abgedichteter Fluidverbindung ist, ist am unteren freien Ende des Verbindungsstabes 55 auf dem Federpaket 54 die Handhabe 69 vorgesehen. Somit ist der reinseitige Filterhohlraum 37, der über den Fluiddurchgang 31 mit dem Abströmraum 7 in Verbindung ist, gegenüber dem rohseitigen Einströmraum 5 über das Filtermedium 33 der Filterkerzen 21 in Verbindung, ansonsten jedoch abgedichtet.

Wenn der Korb 19 mit benutzten Filterkerzen 21 für einen Austauschvorgang aus dem Gehäuse 1 ausgehoben ist, beispielsweise durch Anhängen eines Hebemittels an Anschlagösen und in einer Position abgelegt ist, in der die Unterseite des Korbes 19 frei zugänglich ist, können durch Lösen der Handhabe 69 die Filterkerzen 21 freigegeben werden. Wie Fig. 1 zeigt, weist der Korb 19 einen Einfassungsring 77 auf, der, konzentrisch zum Bund 27 der Trägerplatte 23 die Gruppe der Filterkerzen 21 an deren unterem freien Ende umgibt und mit dem Bund 27 über Streben verbunden ist, die mit dem Bund 27 und dem Ring 77 verschweißt sind und an dem ebenfalls Anschlagösen zur Handhabung des Korbes 19 angebracht sind.

Wie insbesondere die Fig. 2 zeigt, erstreckt sich ein patronenartiges Aufnahmeelement 38 im Wesentlichen über die gesamte Länge aller Filterelemente 33 der Filterkerze 21 respektive des Filterstacks. Das Aufnahmeelement 38 weist einen zylindrischen Umfangsmantel 40 auf, der geschlossen ausgebildet ist. An seinen gegenüberliegenden Stirnseiten 42, 44 sind die korrespondierenden Abschlusswände mit Fluiddurchtrittsstellen 46 versehen, von denen in der Fig. 2 nicht alle dargestellt sind. Insbesondere ist die untere Stirnseite 44 oder Stirnwand haubenartig in Richtung des Mantels 40 vorstehend ausgebildet, sodass die Fluiddurchtrittsstellen 46 auch am Außenumfang der Haube 56 angeordnet sind. Das Adsorptionsmedium 36 liegt als Schüttung im Aufnahmeelement 38 vor und besteht aus Aktivkohle zur Absonderung von Schwermetallen, wie Quecksilber, aus einem Fluidstrom. Der Mantel 40 des Aufnahmeelements 38 ist, auf die Fig. 2 gesehen, am oberen Ende mit einem Haltering 58 fest verbunden, der mit seiner konischen Außenumfangsfläche im montierten Zustand bündig an der konischen Innenumfangsfläche des Konusringes 63 anliegt.

Im Übrigen stützt sich der Haltering 58 mit seiner in Blickrichtung auf die Fig. 2 gesehen oberen Endfläche an der Tragstruktur oder Trägerplatte 23 ab. Wird die Filterkerze 21 als Ganzes, wie beschrieben, von der Trägerplatte 23 abgenommen, kann das Aufnahmeelement 38 patronenartig aus den drei übereinanderliegenden Filterelementen 21, die als Ganzes die Filterkerze 21 mitbilden, herausgezogen werden. Hierbei gleitet der Außenumfang des Mantels 40 an dem Innenumfang eines Stützrohres 48 ab, wobei vorzugsweise ein Stützrohr 48 für drei Filterelemente 21 einer Filterkerze dient, an dem sich außenumfangsseitig das jeweilige Filtermedium 35 eines zuordenbaren Filterelements 21 abstützt. Hierfür ist das perforierte Stützrohr 48, wie in Fig. 2 gesehen, an seiner Oberseite mit dem Konusring 63 verbunden und weist an seiner Unterseite eine Abschlussplatte 60 auf, die von dem Festlegestab 55 durchgriffen ist. Das Stützrohr 48 lässt sich insoweit von dem Festlegestab 55 nach Freigabe über die Handhabe 69 von den einzelnen Filterelementen 33 entfernen.

Das untere Filterelement 33 stützt sich gemäß der Darstellung nach der Fig. 2 mit seiner Endkappe 43 an einer konisch verlaufenden Innenumfangsseite eines Abschlussdeckels 62 ab, der an seiner Übergangsseite zu der genannten Endkappe eine Ringdichtung 64 trägt. Nach Entfernen des Abschlussdeckels 62 mittels der Handhabe 69 unter Lösen der jeweiligen Filterkerze 21 von der Trägerplatte 23 können die einzelnen Filterelemente 33 für deren Austausch von dem Stützrohr 48 abgezogen werden. Insoweit verbleibt die Handhabe 69 mit dem Federpaket 54 und zumindest Teilen des Verbindungsstabes 55 am Abschlussdeckel 62.

Im Betrieb wird die Filterkerze 21 mit ihren einzelnen Filterelementen 33 nebst den zuordenbaren Filtermedien 35 von außen nach innen durchströmt und dabei werden etwaige Partikelverschmutzungen im Fluidstrom von dem jeweiligen Filtermedium 35 abgereinigt. Der derart von Partikelverschmutzungen abgereinigte Fluidstrom tritt dann nach Passieren des perforierten Stützrohres 48 in einen Ringraum 66 zwischen Stützrohr 48 und Mantel 40 ein. Das in dem spaltförmigen Ringraum 66 befindliche Fluid strömt dann, in Blickrichtung auf die Fig. 2 gesehen, von oben nach unten in einen Sammelraum 68 ein und durchquert dann über die unteren Fluiddurchtrittsstellen 46 die Haube 56. Dergestalt tritt das Fluid in das Aufnahmeelement 38 mit dem Adsorptionsmedium 36 ein und durchströmt dieses von unten nach oben und verlässt die Filterkerze 21 über die oberen Fluiddurchtrittsstellen 46 und den freien zylindrischen Querschnitt des Halteringes 58, um insoweit über die Fluidöffnungen 31 in der Trägerplatte 23 in den Reinraum 7 mit seiner Abgabeöffnung 9 zu gelangen. Etwaige Schwermetalle, wie Quecksilber, werden dann mittels des Adsorptionsmediums 36 abgereinigt, sodass der im Reinraum 7 befindliche Fluidstrom auch neben der Partikelverschmutzung von umweltschädigenden Stoffen befreit ist.

## Patentansprüche

1. Filtervorrichtung für Fluide, mit einem Filtergehäuse (1), in dem Elementaufnahmen (31) für eine Mehrzahl von Filterelementen (33) vorgesehen sind, deren Filtermedium (35) im Filtergehäuse (1) eine Rohseite (5) von einer Reinseite (7) trennt, wobei das Filtergehäuse (1) für das Einsetzen und Herausnehmen der Filterelemente (33) öffenbar ist, wobei mindestens zwei Filterelemente (33) in Übereinanderanordnung einen Filterstapel ausbilden, und wobei für die Filterelemente (33) ein Träger in der Art eines Korbes (19) vorgesehen ist, der in das Filtergehäuse (1) einsetzbar und aus diesem herausnehmbar ist und an dem die Filterelemente (33) lösbar festlegbar sind,
**dadurch gekennzeichnet,**
**dass** die Filterelemente (33) neben dem Filtermedium (35) für die Partikelfiltration ein Adsorbtionsmedium (36) aufweisen;
**dass** der jeweilige Filterstapel von einem Aufnahmeelement (38) durchgriffen ist, das in der Art einer Austauschpatrone gebildet ist und das das Adsorbtionsmedium (36) aufweist; und
**dass** das Aufnahmeelement (38) einen zylinderförmigen, geschlossen ausgebildeten Mantel (40) aufweist, der das Adsorbtionsmedium (36) als Schüttung aufnimmt und der zumindest an seinen freien, einander gegenüberliegenden Stirnseiten (42, 44) Fluiddurchtrittsstellen (46) aufweist.

2. Filtervorrichtung nach Anspruch 1, **dadurch gekennzeichnet, dass** das Adsorbtionsmedium (36) Aktivkohle aufweist, vorzugsweise vollständig aus Aktivkohle gebildet ist.

3. Filtervorrichtung nach einem der vorstehenden Ansprüche, **dadurch gekennzeichnet, dass** das jeweilige Filterelement (33) ein mehrlagiges, plissiertes Filtermedium (35) aufweist, das den Mantel (40) des Aufnahmeelementes (38) umfasst.

4. Filtervorrichtung nach einem der vorstehenden Ansprüche, **dadurch gekennzeichnet, dass** zwischen dem jeweiligen Filtermedium (35) und dem zuordenbaren Mantel (40) des Aufnahmeelementes (38) ein fluiddurchlässiges Stützrohr (48) des insoweit eine Baueinheit bildenden Filterelementes (33) angeordnet ist.

5. Filtervorrichtung nach einem der vorstehenden Ansprüche, **dadurch gekennzeichnet, dass** der Korb (19) eine Trägerplatte (23) aufweist, die bei der Einbauposition im Gehäuse (1) die Rohseite (5) von der Reinseite (7) trennt und zur Bildung der Elementaufnahmen Fluiddurchgänge (31) aufweist, an denen die Filterelemente (33) derart lösbar festlegbar sind, dass die Fluiddurchgänge (31) mit dem vom Filtermedium (35) umgebenen inneren Filterhohlraum (37) in Verbindung sind.

6. Filtervorrichtung nach einem der vorstehenden Ansprüche, **dadurch gekennzeichnet, dass** das Filtergehäuse (1) einen den Korb (19) aufnehmenden kreiszylindrischen Abschnitt mit einer von einem abnehmbaren Deckel (15) verschließbaren Öffnung (13) aufweist, durch die hindurch der Korb (19) einsetzbar und herausnehmbar ist, und dass die Trägerplatte (23) kreisrund und bei der Einbauposition umfänglich an einer Gehäusewand abgedichtet ist.

## Claims

1. Filter device for fluids, having a filter housing (1) in which element receivers (31) for a plurality of filter elements (33) are provided, the filter medium (35) of which separates a dirty side (5) from a clean side (7) in the filter housing (1), wherein the filter housing (1) can be opened for inserting and removing the filter elements (33), wherein at least two filter elements (33) forming a filter stack when arranged one above the other, and wherein a carrier in the manner of a basket (19) is provided for the filter elements (33), which carrier can be inserted into the filter housing (1) and removed therefrom and to which the filter elements (33) can be releasably secured,
**characterised in that**
the filter elements (33) comprise an adsorption medium (36) in addition to the filter medium (35) for particle filtration;
**in that** the respective filter stack is penetrated by a receiving element (38) which is formed in the manner of a replacement cartridge and which comprises the adsorption medium (36); and
**in that** the receiving element (38) has a cylindrical, closed casing (40) which holds the adsorption medium (36) as filling and which has fluid passage points (46) at least on its free, mutually opposing end faces (42, 44).

2. Filter device according to claim 1, **characterised in that** the adsorption medium (36) comprises activated carbon, is preferably formed entirely of activated carbon.

3. Filter device according to one of the preceding claims, **characterised in that** the respective filter element (33) comprises a multi-layer, pleated filter medium (35) which surrounds the casing (40) of the receiving element (38).

4. Filter device according to one of the preceding claims, **characterised in that** a fluid-permeable supporting tube (48) of the filter element (33), which in this respect forms a structural unit, is arranged between the respective filter medium (35) and the assignable casing (40) of the receiving element (38).

5. Filter device according to one of the preceding claims, **characterised in that** the basket (19) comprises a carrier plate (23) which, in the installation position in the housing (1), separates the dirty side (5) from the clean side (7) and, in order to form the element receptacles, has fluid passages (31) to which the filter elements (33) can be releasably fixed in such a manner that the fluid passages (31) are in communication with the inner filter cavity (37) surrounded by the filter medium (35).

6. Filter device according to one of the preceding claims, **characterised in that** the filter housing (1) comprises a cylindrical portion holding the basket (19) with an opening (13) which can be closed by a removable cover (15) and through which the basket (19) can be inserted and removed, and **in that** the carrier plate (23) is circular and, in the installed position, is circumferentially sealed to a housing wall.

## Revendications

1. Installation de filtration de fluides, comprenant une enveloppe (1) de filtre, dans laquelle sont prévus des logements (31) d'élément pour une pluralité d'éléments (33) de filtre, dont le milieu (35) filtrant sépare, dans l'enveloppe (1) de filtre, un côté (5) brut d'un côté (7) propre, dans laquelle l'enveloppe (1) de filtres peut être ouverte pour l'insertion et le retrait des éléments (33) de filtre, dans laquelle au moins deux éléments (33) de filtre constituent en superposition un empilement de filtre, et dans laquelle il est prévu pour les éléments (33) de filtres, un support à la manière d'une corbeille (19), qui peut être inséré dans l'enveloppe (1) de filtre et qui peut en être retiré et auquel les éléments (33) de filtre peuvent être fixés de manière amovible,
**caractérisé**
**en ce que** les éléments (33) de filtre ont, outre le milieu (35) filtrant pour la filtration de particules, un milieu (36) d'adsorption ;
**en ce que** l'empilement de filtres respectif est traversé par un élément (38) de réception, qui est formé à la manière d'une cartouche à remplacer et qui a le milieu (36) d'adsorption comme charge ; et
**en ce que** l'élément (38) de réception a une chemise (40) de forme cylindrique, de constitution fermée, qui reçoit le milieu (36) d'adsorption sous la forme d'une charge et qui, au moins sur ses côtés (42, 44) frontaux libres, opposés l'un à l'autre, a des endroits (46) de passage de fluide.

2. Installation de filtration suivant la revendication 1, **caractérisée en ce que** le milieu (36) d'adsorption comporte du charbon actif, en étant constitué, de préférence, entièrement de charbon actif.

3. Installation de filtration suivant l'une des revendications précédentes, **caractérisée en ce que** l'élément (33) respectif de filtre a un milieu (35) filtrant plissé à plusieurs couches, qui entoure la chemise (40) de l'élément (38) de réception.

4. Installation de filtration suivant l'une des revendications précédentes, **caractérisée en ce qu'**entre le milieu (35) filtrant respectif et la chemise (40), pouvant être associée, de l'élément (38) de réception est disposé un tube (48) d'appui perméable aux fluides de l'élément (33) de filtre formant dans cette mesure une unité de construction.

5. Installation de filtration suivant l'une des revendications précédentes, **caractérisée en ce que** la corbeille (19) a une plaque (23), qui forme support, et qui, dans la position de montage dans l'enveloppe (1), sépare le côté (5) brut du côté (7) propre et a, pour la formation des logements d'élément, des passages (31) de fluide, auxquels les éléments (33) de filtre peuvent être fixés de manière amovible de façon à mettre en communication les passages (31) de fluide avec la cavité (37) intérieure de filtre entourée du milieu (35) filtrant.

6. Installation de filtration suivant l'une des revendications précédentes, **caractérisée en ce que** l'enveloppe (1) de filtre a une partie cylindrique de section transversale circulaire, qui reçoit la corbeille (19) et qui a une ouverture (13) pouvant être fermée par un couvercle (15) pouvant être retiré, ouverture par laquelle la corbeille (19) peut être insérée et retirée, et **en ce que** la plaque (23) formant support est circulaire et, dans la position de montage, est rendue étanche sur le pourtour sur une paroi de l'enveloppe.
